# EUROPÄISCHE PATENTSCHRIFT

(11) **EP 1 319 029 B1**
(45) Veröffentlichungstag und Bekanntmachung des Hinweises auf die Patenterteilung: **05.01.2005**
(21) Anmeldenummer: 01980301.4
(22) Anmeldetag: 30.08.2001
(51) Int. Cl.: C08F 6/00

(54) **WASCHVERFAHREN ZUR REINIGUNG VON N- BZW. AMINO-, AMMONIUM- ODER SPIROBICYCLISCHE AMMONIUMGRUPPEN HALTIGEN POLYMEREN**
WASHING PROCESS FOR CLEANING POLYMERS CONTAINING N OR AMINO, AMMONIUM OR SPIROBICYCLIC AMMONIUM GROUPS
PROCEDE DE LAVAGE POUR PURIFIER DES POLYMERES RENFERMANT DES GROUPES N OU AMINO, AMMONIUM OU AMMONIUM SPIROBICYCLIQUES

(30) Priorität: 14.09.2000 AT 155900
(43) Veröffentlichungstag der Anmeldung: 18.06.2003
(73) Patentinhaber: DSM Fine Chemicals Austria Nfg GmbH & Co KG, 4021 Linz (AT)
(72) Erfinder: STANEK, Michael, A-4020 Linz (AT); SCHITTER, Regina, A-4020 Linz (AT); STEINBAUER, Gerhard, A-4470 Enns (AT); SUMMER, Gerald, A-4020 Linz (AT); HILDEBRAND, Peter, A-4020 Linz (AT)
(74) Vertreter: Lindinger, Ingrid
(86) Internationale Anmeldenummer: PCT/EP2001/009968
(87) Internationale Veröffentlichungsnummer: WO 2002/022695

(56) Entgegenhaltungen:
- WO-A-99/33452
- DE-A- 3 908 803

## Beschreibung

Waschverfahren zur Reinigung von N-bzw. Amino-, Ammonium- oder spirobicyclische Ammoniumgruppen haltigen Polymeren

Die Erfindung betrifft ein Waschverfahren zur Reinigung von N-bzw. Amino-, Ammonium- oder spirobicyclische Ammoniumgruppen haltigen Polymeren.

N-bzw. Amino-, Ammonium- oder spirobicyclische Ammoniumgruppen-haltige Polymere sind Polymere mit kationischen Gruppen und geeigneten Gegenionen, die gegebenenfalls hydrophobe Gruppen enthalten können. Die kationischen Gruppen leiten sich dabei beispielsweise von Aminen oder Ammoniumgruppen ab.
Hydrophobe Gruppen sind beispielsweise N- bzw. Amin- oder Ammoniumgruppenhaltige Seitenketten oder Alkylseitenketten, die durch chemische Reaktion mit dem Polymernetzwerk kovalent verknüpft sind.

Geeignete Polymer sind bereits aus dem Stand der Technik, beispielsweise aus WO 01/25291, WO 00/32656, WO 00/38664, WO 99/33452, WO 99/22721, WO 98/43653, US 5 624 963, US 5 496 545 u.s.w., bekannt.

Die Herstellung dieser Polymere erfolgt analog dem Stand der Technik, etwa durch Polymerisation der entsprechenden Monomere, wobei die Vemetzung entweder durch Zugabe des Vemetzungsmittels zum Reaktionsgemisch während der Polymerisation oder im Anschluss an die Polymerisationsreaktion erfolgt. Nach der entsprechenden Gelierzeit werden die erhaltenen Gele gegebenenfalls geschnitten bzw. zerkleinert und gewaschen. Gemäß dem bereits zitierten Stand der Technik erfolgt das Waschen mittels Wasser, Alkohol bzw. Wasser/Alkohol-Gemischen. Der Nachteil der bisher üblichen Waschmethoden liegt, wie Erfahrungswerte sowie Versuche zeigten, einerseits im enorm hohen Alkoholverbrauch und andererseits im äußerst geringen Durchsatz, der auf die starke Quellung des Gels während des Waschvorganges zurückzuführen ist.

Aufgabe der vorliegenden Erfindung war es demnach eine verbesserte Waschmethode für N- bzw. Amin-, Ammonium- oder spirobicyclische Ammoniumgruppenhaltige Polymere zu finden, die einen im Vergleich zum Stand der Technik geringeren Alkoholverbrauch bei erhöhtem Durchsatz gewährleistet.

Unerwarteterweise konnte diese Aufgabe durch ein Waschverfahren gelöst werden, das einen Deprotonierungsschritt oder einen oder mehrere Deprotonierungs- und Reprotonierungsschritte enthält.

Gegenstand der Erfindung ist demnach ein Waschverfahren zur Reinigung von N-bzw. Amin-, Ammonium- oder spirobicyclische Ammoniumgruppenhaltigen Polymeren, enthaltend kationische N-haltige Gruppen, sowie geeignete Gegenionen, das dadurch gekennzeichnet ist, dass die durch Polymerisation und Vernetzung erhaltenen, ausgelierten Polymere
a) durch Zugabe einer Base teilweise oder zur Gänze deprotoniert,
b) die teilweise oder zur Gänze deprotonierten Polymere gewaschen werden, dann
c) gegebenenfalls in einem organischen Lösungsmittel oder in einem organischen Lösungsmittel/Wassergemisch durch Zugabe einer Säure reprotoniert werden, worauf
d) gegebenenfalls zur Schrumpfung der Gele mit einem organischen Lösungsmittel oder einem organischen Lösungsmittel / Wassergemisch gewaschen wird und gegebenenfalls
e) im Anschluss an Schritt c) oder d) die Schritte a) bis c) bzw. bis d) wiederholt werden.

Bei dem erfindungsgemäßen Verfahren werden N- bzw. Amin-, Ammonium- oder spirobicyclische Ammoniumgruppenhaltige Polymere aufgearbeitet. Bei diesen Polymeren handelt es sich um Polymere, die beispielsweise in WO 01/25291, WO 00/32656, WO 00/38664, WO 99/33452, WO 99/22721, WO 98/43653, US 5 624 963 und US 5 496 545 beschrieben sind.

Für das erfindungsgemäße Waschverfahren eignen sich insbesondere kationische Polymere. Zu den kationischen Polymeren gehören u.a. solche Polymere, die ein Amin-N-Atom enthalten wie etwa primäre, sekundäre oder tertiäre Amingruppen oder Salze davon, quaternäre Ammoniumgruppen und/oder spirobicylische Ammoniumgruppen enthalten. Zusätzliche kationische Gruppen beinhalten Amidino, Guanidino, Imino u.s.w.
Das kationische Polymer zeichnet sich dadurch aus, dass es beim physiologischen pH-Wert eine positive Ladung aufweist.
Beispiele für geeignete kationische Polymere beinhalten Polyvinylamine, Polyallylamine, Polydiallylamine, Polyvinylimidazole, Polydiallylalkylamine, Polyethylenimine, u.s.w., sowie Polymere enthaltend die aus beispielsweise WO 00/32656, Seite 7f., WO 98/43653, Seite 4f.; US 5,496,545, Spalte 2 bis 4; US 5,624,963; WO 98/29107 u.s.w. bekannten, sich wiederholenden Einheiten.
Das kationische Polymer kann gegebenenfalls noch mit einem hydrophoben Polymer bzw. einer hydrophoben Komponente, wie etwa in WO 98/43653, WO 99/33452 oder WO 99/22721 u.s.w. beschrieben, kombiniert werden.
Die eingesetzten Polymere sind zudem vemetzt. Die Vemetzung kann dabei bereits während der Polymerisation oder aber auch erst im Anschluss an die Polymerisation durchgeführt werden. Geeignete Vemetzungsmittel beinhalten die aus dem bereits zitierten Literaturstellen bekannten Vemetzungsmittel. Beispiele dafür sind Epichlorhydrin, Succinyldichlorid, Ethylendiamin, Toluoldiisocyanat, Diacrylate, Dimethacrylate, Methylenbisacrylamide, Dichlorethan, Dichlorpropan, u.s.w.
Die für das erfindungsgemäße Verfahren eingesetzten Polymere weisen weiters negativ geladene Gegenionen auf. Diese Gegenionen können organische oder anorganische Ionen oder Kombinationen davon sein. Geeignete Gegenionen beinhalten ebenfalls die aus dem bereits zitierten Stand der Technik bekannten Gegenionen. Beispiele für geeignete anorganische Ionen sind Halogenide, insbesondere Chlorid, Phosphate, Phosphite, Carbonate, Bicarbonate, Sulfate, Bisulfate, Hydroxide, Nitrate, Persulfate, Sulfite und Sulfide. Beispiele für geeignete organische Ionen sind Acetate, Ascorbate, Benzoate, Lactat, Fumarat, Maleat, Pyruvat, Citrate, Dihydrogencitrate, Hydrogencitrate, Propionat, Butyrat, Oxalate, Succinate, Tartrate, Cholate u.s.w..

Die Herstellung der Polymere erfolgt gemäß dem Stand der Technik, etwa wie in WO 99/33452, WO 99/22721, WO 98/43653, US 5 624 963 und US 5 496 545 beschrieben.

Im Anschluss an die Polymerisation, Vernetzung und Gelierzeit erfolgt sodann die erfindungsgemäße Aufarbeitung, der in Gelform erhaltenen Polymere. Das aufzureinigende bzw. zu waschende Gel wird gegebenenfalls vorerst noch zerkleinert bzw. geschnitten.
Das Gel wird sodann im ersten Waschschritt a) bei einer Temperatur von 1 °C bis 100 °C, bevorzugt bei 5 bis 90°C, besonders bevorzugt bei 10 bis 40°C mit Wasser, vorzugsweise mit vollentsalztem Wasser (VE-Wasser), oder einem polaren Lösungsmittel oder einem Gemisch und einer zur Deprotonierung geeigneten Base versetzt. Geeignete polare Lösungsmittel sind Formamid, Dimethylformamid (DMF), Acetonitril, Dimethylsulfoxyd (DMSO) und Hexamethylphosphorsäuretriamid (HMPT). Es können aber auch Gemische derselben oder Gemische mit Wasser eingesetzt werden. Bevorzugt wird jedoch Wasser verwendet. Geeignete Basen sind Hydroxide, wie etwa NaOH, KOH, LiOH, Ca(OH)₂, NH₄OH, Carbonate, wie etwa Na₂CO₃, K₂CO₃ u.s.w.. Bevorzugt wird NaOH, KOH oder NH₄OH verwendet.

Die zu verwendende Menge an Base unterscheidet sich stark vom jeweiligen Gel, und hängt von der Menge der Gegenionen und vom Grad der gewünschten Deprotonierung ab. Die Gele können zur Gänze oder aber auch nur teilweise deprotoniert werden.
Pro mol Gegenionen werden dabei 0,1 bis 5 mol Base, bevorzugt 0,5 bis 3 mol und besonders bevorzugt 0,7 bis 2 mol Base zugesetzt. Größere Überschüsse an Base können gewünschtenfalls auch eingesetzt werden.

Anschließend wird 1 min bis 5 Stunden, bevorzugt 5 min bis 2 Stunden und besonders bevorzugt 15 Minuten bis 1,5 Stunden, bevorzugt unter Rühren, suspendiert.
Längere Rührzeiten sind gewünschtenfalls auch möglich. Nach dem Setzen lassen wird die überstehende Lösung teilweise bis vollständig abfiltriert. Bevorzugt wird bis zur Oberfläche des Gels abfiltriert.

In Schritt b) wird das suspendierte Gel bei einer Temperatur von 1 °C bis 100 °C, bevorzugt bei 5 bis 90°C, besonders bevorzugt bei 10 bis 40°C 1 bis 15-mal, bevorzugt bis 7-mal, mit Wasser, bevorzugt mit VE-Wasser, oder einem polaren Lösungsmittel oder einem Gemisch gewaschen. Geeignete polare Lösungsmittel sind wiederum Formamid, Dimethylformamid (DMF), Acetonitril, Dimethylsulfoxyd (DMSO) und Hexamethylphosphorsäuretriamid (HMPT). Es können aber auch Gemische derselben oder Gemische mit Wasser eingesetzt werden. Bevorzugt wird jedoch Wasser verwendet. Die überstehende Lösung wird jeweils teilweise bis vollständig, bevorzugt bis zur Oberfläche des Gels, abfiltriert. Gegebenenfalls kann während des Schrittes b) zur Aufrechterhaltung der Salzkonzentration bzw. um die Quellung bei den einzelnen Waschschritten möglichst konstant zu halten, am Ende jeder Waschung ein geeignetes Salz, wie etwa NaCl, KCI, NH₄Cl oder LiCl u.s.w. zugesetzt werden, sodass eine ca. 0,1 bis 5%ige, bevorzugt 0,2 bis 2%ige Salzlösung entsteht. Durch die Zugabe des Salzes wird eine Schrumpfung des Gels erreicht, so dass eine raschere Absaugung des Waschmediums erfolgen kann.

In Schritt c) wird das Gel gegebenenfalls in einem organischen Lösungsmittel oder in einem organischen Lösungsmittel/Wassergemisch durch Zugabe einer Säure reprotoniert.
Geeignete organische Lösungsmittel sind dabei lineare, verzweigte oder cyclische C₁-C₁₀-Alkohole mit 1 bis 3 OH-Gruppen, wie etwa Methanol, Ethanol, Isopropanol, n-Propanol, n-Butanol, sek. Butanol, Hexanol, Ethylhexanol, Cyclopentanol, Cyclohexanol, Cyclooctanol Cyclohexandiol, Glykol, Glycerin u.s.w., sowie Ketone, wie etwa Aceton, Methylethylketon, Methylisopropylketon, Methylisobutylketon, Diisopropylketon, Cyclohexanon u.s.w., Nitrile, wie etwa Acetonitril u.s.w. und Ether, wie etwa Tetrahydrofuran, Methyltert.-butylether, Dimethoxyethan, u.s.w.
Bevorzugt werden C₁-C₄-Alkohole, besonders bevorzugt Isopropanol eingesetzt.
Unter organischem Lösungsmittel sind dabei auch Gemische der oben angeführten Lösungsmittel zu verstehen.
Bevorzugt wird ein organisches Lösungsmittel/Wassergemisch eingesetzt. Das Verhältnis von organischem Lösungsmittel zu Wasser liegt dabei in einem Bereich von 1/99 bis 99/1, bevorzugt von 30/70 bis 95/5 und besonders bevorzugt von 50/50 bis 90/10.

Als Säuren für die Reprotonierung eignen sich alle Mineralsäuren und organische Säuren, die zu den bereits angeführten Gegenionen führen.
Dies sind beispielsweise HCl, HBr, H₂SO₄, H₃PO₄, HNO₃ u.s.w. sowie Ameisensäure, Essigsäure, Oxalsäure, Zitronensäure, Brenztraubensäure, Maleinsäure, Fumarsäure, Propionsäure, Weinsäure u.s.w..
Die Menge an eingesetzter Säure hängt vom gewünschten Reprotonierungsgrad ab, da es möglich ist, das Gel zur Gänze aber auch nur teilweise zu reprotonieren.

Das Gel wird dabei zuerst in dem organischen Lösungsmittel oder dem Lösungsmittel/Wassergemisch gerührt. Die Rührzeit beträgt dabei wenige Minuten bis mehrere Stunden, bevorzugt 1 bis 60 Minuten, besonders bevorzugt für 5 bis 30 Minuten. Längere Rührzeiten sind gewünschtenfalls auch möglich. Die Temperatur liegt wiederum zwischen 1 und 100 °C, bevorzugt 5 bis 90°C, besonders bevorzugt 10 bis 40°C. Dann wird mit jener Menge an Säure versetzt, die zur vollständigen oder teilweisen Reprotonierung der Amine im Polymer führt. Anschließend wird die überstehende Lösung wieder teilweise bis vollständig, bevorzugt bis zur Oberfläche des Gels, abfiltriert.

In Schritt d) wird gegebenenfalls zur Schrumpfung des Gels weitere ein bis 10 mal, bevorzugt 1-3 mal, mit einem organischen Lösungsmittel oder einem organischen Lösungsmittel / Wassergemisch im Verhältnis 1/99 bis 99/1, bevorzugt 30/70 bis 95/5 und besonders bevorzugt 50/50 bis 90/10, gewaschen.
Zuletzt wird das Lösungsmittel oder das Lösungsmittel / Wassergemisch abfiltriert, bis ein rieselfähiges Produkt erhalten wird.

Gegebenenfalls können im Anschluss an Schritt c) oder d) die Schritte a) bis c) bzw. d) 1 bis 5mal, bevorzugt bis 1-3 mal, wiederholt werden.

Durch das erfindungsgemäße Verfahren können N- bzw. Amin-, Ammonium- oder spirobicyclische Ammoniumgruppenhaltige Polymere mit einem im Vergleich zum Stand der Technik wesentlich geringeren organischen Lösungsmittelverbrauch, der zumeist nur noch 1/5 der bisher üblichen Menge beträgt, bei vergleichsweise deutlich erhöhtem Durchsatz (bis zu einer Verdoppelung des Durchsatzes) gewaschen werden. Weiters ermöglicht das erfindungsgemäße Waschverfahren eine deutlich bessere Abtrennung sämtlicher Verunreinigungen und führt dadurch insbesondere zu einer deutlichen Reduktion des Gehaltes an löslichen Oligomeren bis hinab in den Bereich der Nachweisgrenze (< 0,1 %).

Das erfindungsgemäße Verfahren eignet sich insbesondere zur Waschung von Polymeren, die vernetzt sind und kationische N-haltige bzw. Amin-, Ammonium- oder spirobicyclische Ammonium-Gruppen, sowie geeignete Gegenionen enthalten. Bevorzugt wird das Verfahren jedoch zur Waschung von vemetzten Polyallylaminen und Polydiallylaminen eingesetzt.

### Beispiel 1:

Herstellung eines mit Epichlorhydrin vernetzten Polydiallylaminhydrochlorids analog dem Stand der Technik und Reinigung durch erfindungsgemäßes Waschverfahren:

### Polymerisation:

In einem 1 l Schmizo wurden unter Stickstoffatmosphäre 448.5 g VE-Wasser und 192.5 g (1.97 mol) Salzsäure (37.4 %ig) vorgelegt. Bei einer Innentemperatur von max. 35 °C wurden unter Kühlung mittels Thermokryostaten (10 °C) 191.0 g (1,97 mol) Diallylamin binnen 15 min. zugegeben. Nach beendeter Zugabe wurde mit Salzsäure oder Diallylamin der pH-Wert auf ca. 1.9 bis 2.0 bei 20 °C gestellt. Nach dem Aufheizen auf ca. 50 °C wurden 2.6 g (0.0096 mol) V-50-Initiator (Azodiisobutyramidin Dihydrochlorid) in 26.0 g VE-Wasser gelöst zugegeben, wobei die Reaktionsmischung auf 60 °C innerhalb 1 Stunde erwärmt wurde. Nach 12 Stunden wurden erneut 3.9 g (0.0144 mol) V-50-Initiator in 36.0 g VE-Wasser gelöst zugegeben. Abermals nach 12 Stunden wurden 3.9 g V-50-Initiator in 42.0 g VE-Wasser gelöst zugegeben. Die Ausbeute der wässrigen etwa 27.5 %igen Lösung an Polydiallylamin Hydrochlorid betrug 930 g.

### Vernetzung:

In einem 4.5 l Schmizo wurden 2000 g (4.116 mol) Polydiallylaminhydrochlorid-Lösung vorgelegt und mit 880 g VE-Wasser unter Rühren und Stickstoffspülung verdünnt. Anschließend wurde bei ca. 5 bis 10 °C mit 94 g (1.175 mol) Natronlauge (50 %ig) auf einen pH-Wert zwischen 10,4 - 10,8 gestellt. Die erhaltene Lösung wurde mindestens 60 Minuten gerührt und währenddessen auf 5°C Innentemperatur abgekühlt. Das Reaktionsgemisch wurde mit 17.8 g (0.192 mol) Epichlorhydrin versetzt, 30 Minuten bei 5 °C gerührt und anschließend zum Gelieren in ein Plastikgefäß abgelassen. Die Ausbeute betrug 100 % der Theorie. Nach 24 Stunden Gelierzeit wurden durch Schneiden Gelpartikel mit einer Kantenlänge von ca. 2 x 2 x 2 mm hergestellt.

### Waschen:

In einer Glassinternutsche (13 cm ∅) wurden 150 g geschnittenes Gel (Quader mit ca. 2 × 2 × 2 mm Kantenlänge) vorgelegt, mit 600 g VE-Wasser und 14 g NaOH (50 %ig) versetzt, 30 bis 40 Minuten lang unter Rühren suspendiert und anschließend nach dem Setzen lassen (ca. 2 min) bis zur Oberfläche abfiltriert. Anschließend wurde das suspendierte Gel ein Mal 30 Minuten lang unter Rühren mit 600 g VE-Wasser gewaschen und bis zur Oberfläche abfiltriert. Danach wurde das suspendierte Gel 5 Mal 20 Minuten mit je 600 g VE-Wasser gerührt, wobei nach dieser 20 Minuten andauernden Rührzeit je Waschschritt 3 g NaCl dazugegeben wurden (ca. 0.5 %ige NaCl Lösung). Es wurde jeweils weitere 10 Minuten gerührt und wieder bis zur Oberfläche abfiltriert. Danach wurden die Gelpartikelchen 15 Minuten mit 600 g Isopropanol / VE-Wasser (90/10 w/w) gerührt, wobei nach Zugabe von 11.6 ml konzentrierter HCl (37,4 %ig) weitere 20 Minuten gerührt (bis der pH-Wert der Waschlösung neutral oder leicht basisch war) und bis zur Oberfläche abfiltriert wurde. Anschließend wurde das Gel zwei Mal 30 Minuten mit 250 g Isopropanol / VE-Wasser (75/25 w/w) gerührt und abfiltriert, bis das feuchte Produkt rieselfähig war. Man erhielt 68 g feuchtes Rohgel mit einem Trockensubstanzgehalt von 34 %.

### Beispiel 2:

Herstellung eines mit Epichlorhydrin vemetzten Polyallylaminhydrochlorides analog dem Stand der Technik und Reinigung durch erfindungsgemäßes Waschverfahren:

### Vernetzung:

In einem 4.5 l Schmizo wurden 1500 g (8.02 mol) einer wäßrigen 50 %igen Polyallylaminhydrochlorid-Lösung (Fa. Salsbury Chemicals) vorgelegt und mit 1995 g VE-Wasser unter Rühren und Stickstoffspülung verdünnt. Anschließend wurde bei 10 °C mit 449 g (5.613 mol) Natronlauge (50 %ig) auf einen pH-Wert zwischen 10,3 - 10,6 gestellt. Die erhaltene Lösung wurde 60 Minuten gerührt und währenddessen auf 5°C Innentemperatur abgekühlt. Das Reaktionsgemisch wurde mit 69.77 g (0.75 mol) Epichlorhydrin versetzt, 30 Minuten bei 5 °C gerührt und anschließend zum Gelieren in ein Plastikgefäß abgelassen. Die Ausbeute betrug 100 % der Theorie. Nach 24 Stunden Gelierzeit wurden durch Schneiden Gelpartikel mit einer Kantenlänge von ca. 2 x 2 x 2 mm hergestellt.

### Waschen:

In einer Glassinternutsche (18 cm ∅) wurden 563 g geschnittenes Gel (Quader mit ca. 2 x 2 x 2 mm Kantenlänge) vorgelegt, mit 1500 g VE-Wasser und 27 g NaOH (50 %ig) versetzt, 30 bis 40 Minuten lang unter Rühren suspendiert und anschließend nach dem Setzen lassen (ca. 2 min) bis zur Oberfläche abfiltriert. Anschließend wurde das suspendierte Gel ein Mal 30 Minuten lang unter Rühren mit 1500 g VE-Wasser gewaschen und bis zur Oberfläche abfiltriert. Danach wurde das suspendierte Gel 5 Mal 20 Minuten mit je 1500 g VE-Wasser gerührt, wobei nach dieser 20 Minuten andauernden Rührzeit je Waschschritt 7.5 g NaCl dazugegeben wurden (ca. 0.5 %ige NaCl Lösung). Es wurde jeweils weitere 10 Minuten gerührt und wieder bis zur Oberfläche abfiltriert. Danach wurden die Gelpartikelchen 15 Minuten mit 1400 g Isopropanol / VE-Wasser (80/20 w/w) gerührt, wobei nach Zugabe von 24 ml konzentrierter HCl (37,4 %ig) weitere 20 Minuten gerührt (bis der pH-Wert der Waschlösung neutral oder leicht basisch war) und bis zur Oberfläche abfiltriert wurde. Anschließend wurde das Gel einmal 30 Minuten mit 900 g Isopropanol / VE-Wasser (80/20 w/w) gerührt und abfiltriert, bis das feuchte Produkt rieselfähig war. Man erhielt 255 g feuchtes Rohgel mit einem Trockensubstanzgehalt von 35 %.

## Patentansprüche

1. Waschverfahren zur Reinigung von N- bzw. Amin-, Ammonium oder spirobicyclischen Ammoniumgruppenhaltigen Polymeren, enthaltend kationische N-haltige Gruppen, sowie geeignete Gegenionen, **dadurch gekennzeichnet, dass** die durch Polymerisation und Vernetzung erhaltenen, ausgelierten Polymere
a) durch Zugabe einer Base teilweise oder zur Gänze deprotoniert,
b) die teilweise oder zur Gänze deprotonierten Polymere gewaschen werden, dann
c) gegebenenfalls in einem organischen Lösungsmittel oder in einem organischen Lösungsmittel/Wassergemisch durch Zugabe einer Säure reprotoniert werden, worauf
d) gegebenenfalls zur Schrumpfung der Gele mit einem organischen Lösungsmittel oder einem organischen Lösungsmittel / Wassergemisch gewaschen wird und gegebenenfalls
e) im Anschluss an Schritt c) oder d) die Schritte a) bis c) bzw. bis d) wiederholt werden.

2. Verfahren nach Anspruch 1, **dadurch gekennzeichnet, dass** als N- bzw. Amin-, Ammonium- oder spirobicyclische Ammoniumgruppenhaltige Polymere vernetzte, kationische Polymere eingesetzt werden, die primäre, sekundäre oder tertiäre Amingruppen oder Salze davon, quaternäre Ammoniumgruppen und/oder spirobicyclische Ammoniumgruppen, Amidinogruppen, Guanidinogruppen oder lminogruppen, sowie negativ geladene anorganische und/oder organische Gegenionen aus der Gruppe der Halogenide, Phosphate, Phosphite, Carbonate, Bicarbonate, Sulfate, Bisulfate, Hydroxide, Nitrate, Persulfate, Sulfite und Sulfide, Acetate, Ascorbate, Benzoate, Lactate, Fumarate, Maleate, Pyruvate, Citrate, Dihydrogencitrate, Hydrogencitrate, Propionate, Butyrate, Oxalate, Succinate, Tartrate und Cholate enthalten, wobei die kationischen Polymere gegebenenfalls mit hydrophoben Polymeren bzw. Komponenten kombiniert sein können.

3. Verfahren nach Anspruch 1, **dadurch gekennzeichnet, dass** als Polymere vernetzte Polyvinylamine, Polyallylamine, Polydiallylamine, Polyvinylimidazole, Polydiallylalkylamine oder Polyethylenimine mit geeigneten Gegenionen eingesetzt werden.

4. Verfahren nach Anspruch 1, **dadurch gekennzeichnet, dass** in Waschschritt a) das gegebenenfalls vorher zerkleinerte bzw. geschnittene Gel bei einer Temperatur von 1 bis 100°C mit Wasser oder mit einem polaren Lösungsmittel aus der Gruppe Formamid, Dimethylformamid, Acetonitril, Dimethylsulfoxyd und Hexamethylphosphorsäuretriamid oder mit einem Gemisch derselben oder mit einem Gemisch mit Wasser und einer zur Deprotonierung geeigneten Base aus der Gruppe NaOH, KOH, LiOH, Ca(OH)₂, NH₄OH, Na₂CO₃ und K₂CO₃, versetzt wird, wobei pro mol Gegenion 0,1 bis 5 mol Base zugesetzt werden, anschließend 1 min bis 5 Stunden suspendiert wird und nach dem Setzen lassen die überstehende Lösung teilweise bis vollständig abfiltriert wird.

5. Verfahren nach Anspruch 1, **dadurch gekennzeichnet, dass** in Schritt b) das suspendierte Gel bei einer Temperatur von 1 bis 100°C 1 bis 15 mal mit Wasser oder mit einem polaren Lösungsmittel aus der Gruppe Formamid, Dimethylformamid, Acetonitril, Dimethylsulfoxyd und Hexamethylphosphorsäuretriamid oder mit einem Gemisch derselben oder mit einem Gemisch mit Wasser gewaschen und jeweils die überstehende Lösung teilweise bis vollständig abfiltriert wird, wobei gegebenenfalls zur Aufrechterhaltung der Salzkonzentration am Ende jeder Waschung ein geeignetes Salz zugesetzt werden kann, sodass eine 0,1 bis 5%ige Salzlösung erhalten wird.

6. Verfahren nach Anspruch 1, **dadurch gekennzeichnet, dass** in Schritt c) als organisches Lösungsmittel lineare, verzweigte oder cyclische C₁-C₁₀-Alkohole mit 1 bis 3 OH-Gruppen aus der Gruppe Methanol, Ethanol, Isopropanol, n-Propanol, n-Butanol, sek. Butanol, Hexanol, Ethylhexanol, Cyclopentanol, Cyclohexanol, Cyclooctanol, Cyclohexandiol, Glykol, Glycerin, sowie Ketone aus der Gruppe Aceton, Methylethylketon, Methylisopropylketon, Methylisobutylketon, Diisopropylketon, Cyclohexanon, oder Nitrile und Ether aus der Gruppe Tetrahydrofuran, Methyltert.butylether, Dimethoxyethan oder Gemische derselben verwendet werden, wobei im Falle von Lösungsmittel/Wassergemischen das Verhältnis in einem Bereich von 1/99 bis 99/1 liegt.

7. Verfahren nach Anspruch 1, **dadurch gekennzeichnet, dass** in Schritt c) zur Reprotonierung Mineralsäuren oder organische Säuren eingesetzt werden, die zu den ursprünglich im Polymer vorhandenen Gegenionen führen.

8. Verfahren nach Anspruch 1, **dadurch gekennzeichnet, dass** im Schritt c) das Gel zuerst in dem organischen Lösungsmittel oder dem Lösungsmittel/Wassergemisch für wenige Minuten bis zu mehreren Stunden bei 1 bis 100°C gerührt wird, dann mit jener Menge an Säure versetzt wird, die zur teilweisen bis vollständigen Reprotonierung führt, worauf die überstehende Lösung teilweise bis vollständig abfiltriert wird.

9. Verfahren nach Anspruch 1, **dadurch gekennzeichnet, dass** in Schritt d) gegebenenfalls weitere 1 bis 10 mal mit dem organischen Lösungsmittel oder dem Lösungsmittel/Wassergemisch gewaschen wird.

10. Verfahren nach Anspruch 1, **dadurch gekennzeichnet, dass** nach Beendigung des Waschverfahrens das organische Lösungsmittel oder das Lösungsmittel/Wassergemisch abfiltriert wird, bis ein rieselfähiges Produkt erhalten wird.

## Claims

1. Washing process for the purification of polymers containing N or amine, ammonium or spirobicyclic ammonium groups, comprising cationic N-containing groups, and suitable counterions, **characterized in that** the gelled polymers obtained by polymerization and crosslinking
a) are partially or completely deprotonated by addition of a base,
b) the partially or completely deprotonated polymers are washed, then
c) optionally reprotonated in an organic solvent or in an organic solvent/water mixture by addition of an acid, after which
d) the mixture is optionally washed with an organic solvent or an organic solvent/water mixture for the shrinkage of the gels and, optionally,
e) following step c) or d), steps a) to c) or to d) are repeated.

2. Process according to Claim 1, **characterized in that** the polymers containing N or amine, ammonium or spirobicyclic ammonium groups employed are crosslinked, cationic polymers which contain primary, secondary or tertiary amine groups or salts thereof, quaternary ammonium groups and/or spirobicyclic ammonium groups, amidino groups, guanidino groups or imino groups, and negatively charged inorganic and/or organic counterions from the group consisting of the halides, phosphates, phosphites, carbonates, bicarbonates, sulphates, bisulphates, hydroxides, nitrates, persulphates, sulphites and sulphides, acetates, ascorbates, benz-oates, lactates, fumarates, maleates, pyruvates, citrates, dihydrogencitrates, hydrogencitrates, propionates, butyrates, oxalates, succinates, tartrates and cholates, where the cationic polymers can optionally be combined with hydrophobic polymers or components.

3. Process according to Claim 1, **characterized in that** the polymers employed are polyvinylamines, polyallylamines, polydiallylamines, polyvinylimidazoles, polydiallylalkylamines or polyethylenimines having suitable counterions.

4. Process according to Claim 1, **characterized in that** in washing step a) the optionally previously comminuted or chopped gel is treated at a temperature of 1 to 100°C with water or with a polar solvent from the group consisting of formamide, dimethylformamide, acetonitrile, dimethyl sulphoxide and hexamethylphosphoric triamide or with a mixture thereof or with a mixture with water and a base suitable for deprotonation from the group consisting of NaOH, KOH, LiOH, Ca(OH)₂, NH₄OH, Na₂CO₃ and K₂CO₃, 0.1 to 5 mol of base being added per mole of counterion, the mixture subsequently being suspended for 1 min to 5 hours and, after settling has been allowed to take place, the supernatant solution being partially to completely filtered off.

5. Process according to Claim 1, **characterized in that** in step b), at a temperature from 1°C to 100°C, the suspended gel is washed 1 to 15 times with water or with a polar solvent from the group consisting of formamide, dimethylformamide, acetonitrile, dimethyl sulphoxide and hexamethylphosphoric triamide or with a mixture thereof or with a mixture with water and in each case the supernatant solution is filtered off partially to completely, it being possible for the maintenance of the salt concentration to add a suitable salt at the end of each washing, so that a 0.1 to 5% strength salt solution is obtained.

6. Process according to Claim 1, **characterized in that** in step c) the organic solvents used are linear, branched or cyclic C₁-C₁₀-alcohols having 1 to 3 OH groups from the group consisting of methanol, ethanol, isopropanol, n-propanol, n-butanol, sec-butanol, hexanol, ethylhexanol, cyclopentanol, cyclohexanol, cyclooctanol, cyclohexanediol, glycol, glycerol, and ketones from the group consisting of acetone, methyl ethyl ketone, methyl isopropyl ketone, methyl isobutyl ketone, diisopropyl ketone, cyclohexanone, or nitriles and ethers from the group consisting of tetrahydrofuran, methyl tert-butyl ether, dimethoxyethane or mixtures thereof, in the case of solvent/water mixtures the ratio being in a range from 1/99 to 99/1.

7. Process according to Claim 1, **characterized in that** in step c) mineral acids or organic acids are employed for the reprotonation which lead to the counterions originally present in the polymer.

8. Process according to Claim 1, **characterized in that** in step c) the gel is firstly stirred in the organic solvent or the solvent/water mixture for a few minutes up to a number of hours at 1 to 100°C, then treated with that amount of acid which leads to partial to complete reprotonation, after which the supernatant solution is partially to completely filtered off.

9. Process according to Claim 1, **characterized in that** in step d) washing with the organic solvent or the solvent/water mixture is optionally carried out a further 1 to 10 times.

10. Process according to Claim 1, **characterized in that** after completion of the washing process the organic solvent or the solvent/water mixture is filtered off until a pourable product is obtained.

## Revendications

1. Procédé de lavage pour purifier des polymères contenant des groupes N ou amino, ammonium ou ammonium spirobicycliques, comprenant des groupes cationiques contenant des groupes N, ainsi que des contre-ions appropriés, **caractérisé en ce que** les polymères contenus, gélifiés par polymérisation et réticulation
a) sont déprotonés en partie ou en totalité par l'addition d'une base,
b) les polymères déprotonés en partie ou en totalité sont lavés, puis
c) éventuellement, ils sont reprotonés dans un solvant organique ou dans un mélange de solvant/eau par addition d'un acide,
d) et éventuellement, un lavage étant effectué pour rétrécir les gels avec un solvant organique ou un mélange de solvant organique/eau et éventuellement,
e) à la suite de l'étape c) ou d), les étapes a) à c) ou à d) sont répétées.

2. Procédé selon la revendication 1, **caractérisé en ce que** l'on utilise comme polymères contenant des groupes N ou amino, ammonium ou ammonium spirobicycliques réticulés, des polymères cationiques qui contiennent des groupes amine A primaires, secondaires ou tertiaires ou leurs sels, des groupes ammonium quaternaire et/ou des groupes ammonium spirobicycliques, des groupes amidino, des groupes guanidino ou des groupes imino ainsi que des contre-ions anorganiques et/ou organiques à charge négative dans le groupe des halogénures, phosphates, phosphites, carbonates, bicarbonates, sulfates, bisulfates, hydroxydes, nitrates, persulfates, sulfites et sulfures, acétates, ascorbates, benzoates, lactates, fumarates, maléates, pyruvates, citrates, dihydrogènocitrates, hydrogènocitrates, propionates, butyrates, oxalates, succinates, tartrates et cholates, les polymères cationiques pouvant être combinés éventuellement avec des polymères ou composants hydrophobes.

3. Procédé selon la revendication 1, **caractérisé en ce que** l'on utilise comme polymères réticulés, la polyvinylamine, la polyallylamine, la polydiallylamine, le polyvinylimidazole, la polydiallylalkylamine, la polyéthylène-imine, avec des contre-ions appropriés.

4. Procédé selon la revendication 1, **caractérisé en ce que** à l'étape a), le gel éventuellement préalablement réduit ou découpé est mélangé à une température de 1 à 100°C avec de l'eau ou avec un solvant polaire du groupe comprenant le formamide, le diméthylformamide, l'acétonitrile, le diémthylsulfoxyde et l'hexaméthylphosphotriamide ou un mélange de ceux-ci ou avec un mélange d'eau et d'une base appropriée pour la déprotonation, comprise dans le groupe comprenant NaOH, KOH, LiOH, Ca(OH)₂, NH₄OH, Na₂CO₃ et K₂CO₃, 0,1 à 5 moles de base étant ajoutées par mole de contre-ion, le mélange étant ensuite mis en suspension pendant 1 min. à 5 heures et après décantation, le solution surnageante étant partiellement à complètement filtrée.

5. Procédé selon la revendication 1, caractérisé en ce à l'étape b), que le gel en suspension est lavé 1 à 15 fois à une température de 1 à 100°C avec de l'eau ou avec un solvant polaire compris dans le groupe comportant le formamide, le diméthylformamide, l'acétonitrile, le diméthylsulfoxyde et l'hexaméthylphosphotriamide ou avec un mélange de ceux-ci ou avec un mélange avec de l'eau, et la solution surnageante est filtrée partiellement à complètement, un sel approprié étant ajouté à la fin de chaque lavage pour maintenir la concentration en sel, de sorte que l'on obtienne une solution salée de 0,1 à 5 %.

6. Procédé selon la revendication 1, **caractérisée en ce que** l'on utilise à l'étape c) comme solvant organique, des alcools linéaires, ramifiés ou cycliques en C₁-C₁₀ comportant 1 à 3 groupes OH compris dans le groupe constitué par le méthanol, l'éthanol, l'isopropanol, le n-propanol, le n-butanol, le butanol secondaire, l'hexanol, l'éthylhexanol, le cyclopentanol, le cyclohexanol, le cyclo-octanol, le cyclohexandiol, le glycol, la glycérine, ainsi que des cétones compris dans le groupe constitué de l'acétone, de la méthyléthylcétone, de la méthylisopropylcétone, de la méthylisobutylcétone, de la diisopropylcétone, du cyclohexanone ou des nitriles et des éthers compris dans le groupes constitué du tétrahydrofurane, du méthyltert-butyléther, du diméthoxyéthane ou de leurs mélanges, le rapport se situant dans une plage de 1/99 à 99/1 dans le cas de mélanges de solvant/eau.

7. Procédé selon la revendication 1, **caractérisé en ce que**, à l'étape c), on utilise pour la reprotonation, des acides minéraux ou des acides organiques, qui donnent des contre-ions présents à l'origine dans le polymère.

8. Procédé selon la revendication 1, **caractérisé en ce que**, à l'étape c), le gel est tout d'abord agité pendant quelques minutes à plusieurs heures à une température de 1 à 100°C dans le solvant organique ou dans le mélange solvant/eau, puis est mélangé avec une quantité quelconque d'acide qui entraîne une reprotonation partielle à complète, la solution surnageante étant filtrée en partie ou complètement.

9. Procédé selon la revendication 1, **caractérisé en ce que**, à l'étape d), un lavage est à nouveau effectué éventuellement de 1 à 10 fois avec le solvant organique ou le mélange solvant organique/eau.

10. Procédé selon la revendication 1, **caractérisé en ce que**, à la fin du procédé de lavage du solvant organique ou du mélange solvant organique/eau, un filtrage est effectué jusqu'à ce que l'on obtienne un produit coulant.
